# EUROPEAN PATENT APPLICATION

(11) **EP 1 820 989 A1**
(43) Date of publication of application: **22.08.2007**
(21) Application number: 05782302.3
(22) Date of filing: 08.09.2005
(51) Int. Cl.: F16D 3/41, F16B 31/06, F16B 35/00, F16D 3/20, F16D 3/26

(54) **UNIVERSAL JOINT**

(30) Priority: 09.09.2004 JP 2004262015
(71) Applicant: JTEKT CORPORATION, Chuo-ku Osaka-shi Osaka 542-8502 (JP)
(72) Inventor: NAGAYAMA, Akihide c/o JTEKT CORPORATION, Osaka 542-8502 (JP); KOMEYAMA, Nobuo c/o JTEKT CORPORATION, Osaka 542-8502 (JP)
(74) Representative: Schaeberle, Steffen
(86) International application number: PCT/JP2005/016529
(87) International publication number: WO 2006/028177

(57) **Abstract**

There is provided a universal joint in which a crack is difficult to be produced at a bottom portion of a screw of a bolt for fixing a bearing cup or a bearing holder to a yoke even when excessive large load repeatedly acts and which can withstand to be used over a long period of time under a condition in which a large load of a drive system of a load of a rolling mill or the like acts.

In a universal joint of a block type or the like in which a bearing cup 3 for supporting a trunnion 11 of a joint cross 1 through needle-like rollers 2 is fixed to a yoke 4 by a bolt 5, by constituting the bolt 5 by a bolt subjected to roll forming after a heat treatment, a fiber flow along a shape of a screw is formed, a residual compressive stress is generated right below a surface of a bottom portion of the screw, and an allowable fatigue limit is considerably increased in comparison with that of a bolt by turning process of a background art.

## Description

### Technical Field

The present invention relates to a universal joint, particularly relates to a universal joint suitable for being used for a drive system on which a high load acts such as in a rolling mill or the like.

### Background Art

For example, a mechanism for driving a roll of a rolling mill is provided with a universal joint between a driving motor and a roll. As a universal joint of this kind, a block type or the like is known (refer to, for example, Patent Reference 1).

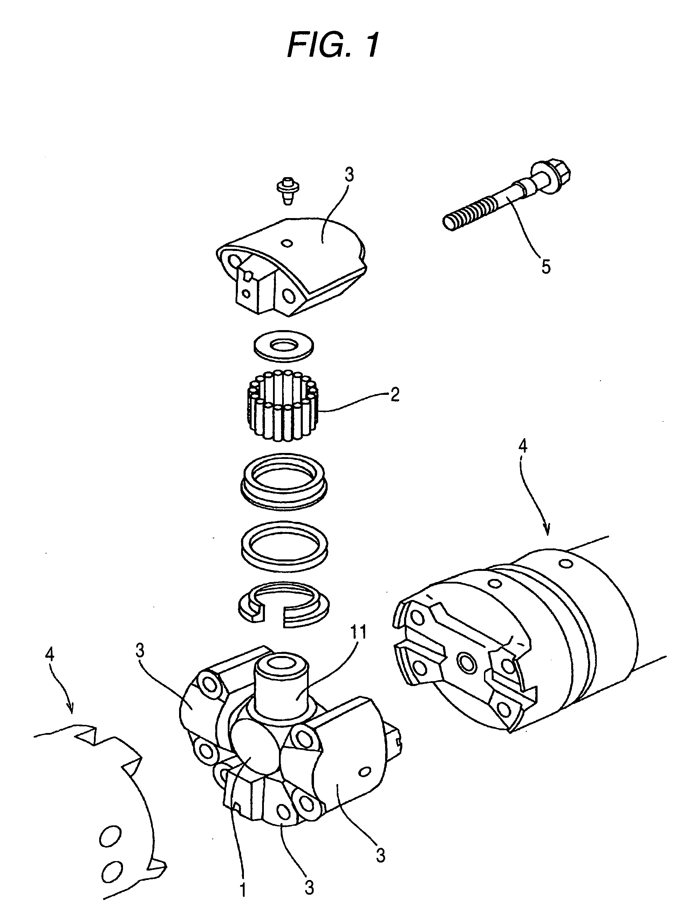

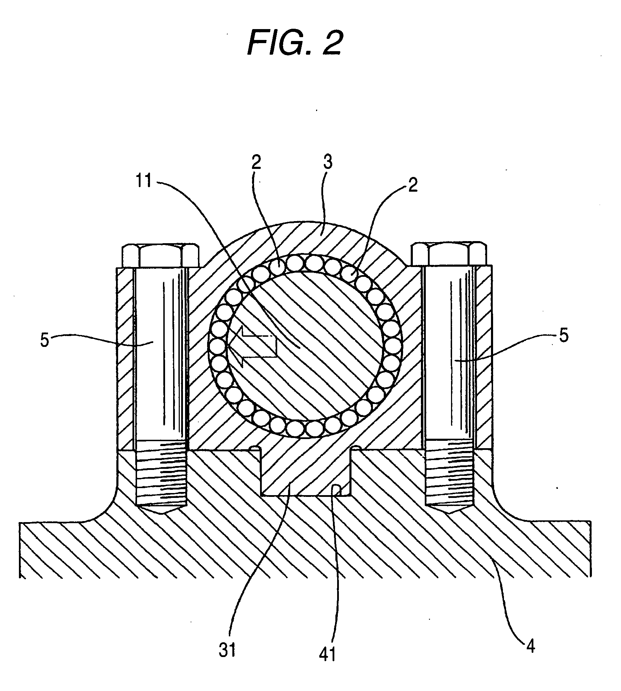

The universal joint of the block type adopts a structure in which respective trunnions of a joint cross are supported by block shape bearing cups respectively via rollers, and the respective bearing cups are fixedly jointed to yokes by way of bolts. For convenience of explanation, when an explanation is given in reference to Fig.1 showing a partially disassembled perspective view and Fig.2 showing a sectional view of a vicinity of a trunnion orthogonal to an axis thereof, which are drawings of an embodiment of the invention, mentioned later, in the respective drawings, numeral 1 designates a joint cross, numeral 11 designates respective trunnions thereof, the respective trunnions 11 are supported by bearing cups 3 through a plurality of pieces of rollers 2, and the bearing cups 3 are fixedly jointed to yokes 4 through bolts 5. The bearing cup 3 is integrally formed with a key portion 31 at a face thereof jointed to the yoke 4, and by fitting a key portion 31 to a key way 41 formed on a side of the yoke 4, a torque is transmitted in cooperation with the bolt 5.

That is, a rotational power of one of the yokes 4 is transmitted to the bearing cup 3 through the trunnion 11 of the joint cross 1 as a load at a position indicated by an arrow mark in Fig.2, and transmitted to the other yoke 4 by an axial force of the bolt 5 and a face pressure between the key portion 31 and the key way 41.

Here, as the bolt 5 of the background art used in the kind of the universal joint, the bolt 5 used in the drive system of the roll of the rolling mill is as large as M36 through M80. Therefore, the bolt which is screwed by turning process and thereafter tempered by a heat treatment is generally used. A strength range thereof is classified to 10.9 or 12.9.
Patent Reference 1: JP-A-2002-181069

### Disclosure of the Invention

### Problems that the Invention is to Solve

Meanwhile, in the above-described universal joint, there is a case of producing a crack whose onset is at a bottom portion of a screw of the bolt 5 when an excessively large load acts repeatedly. This is because a portion where the bolt 5 is assembled is elastically deformed by an excessively large load and a compound load of tension and bending is repeatedly applied to the bolt 5.

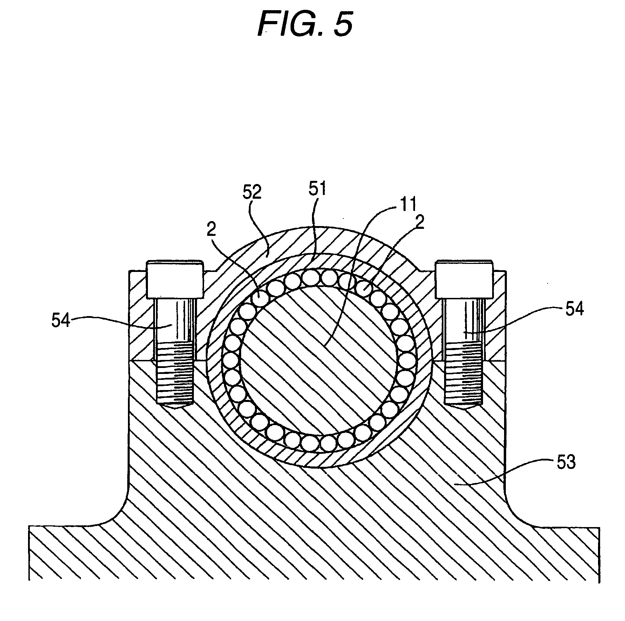

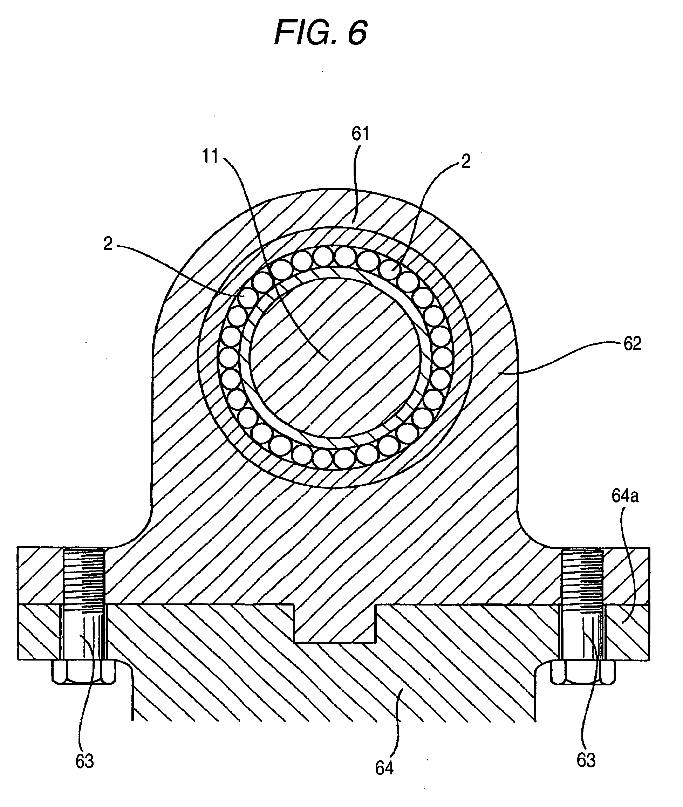

Such a phenomenon can be regarded to be brought about not only in a universal joint of the block type but also in a universal joint of other type using a bolt such as a round type (refer to Fig.5, mentioned later) and a split type (refer to Fig.6, mentioned later) or the like.

The invention has been carried out in view of such a situation and it is an object to provide a universal joint in which a crack is difficult to be brought about at a bottom portion of a screw of a bolt even when an excessive large load acts repeatedly to thereby enable to withstand use over a long period of time under a condition in which a large load acts such as in a drive system of a roll of a rolling mill or the like.

### Means for solving the Problems

In order to resolve the above-described problem, a universal joint of the invention is characterized in a universal joint in which bearing cups for supporting respective trunnions of a joint cross by way of needle-like rollers or a holding member thereof is fixed to a yoke by a bolt, or a yoke fitted with a bearing cup is fixed to a flange by a bolt, wherein the bolt is a bolt subjected to forming of a rod after a heat treatment (Claim 1).

Here, according to the invention, a constitution that a material of the bolt comprises nickel chromium molybdenum steel (Claim 2) can preferably be adopted, further, it is preferable to construct a constitution that a maximum residual compressive stress of the bolt is equal to or larger than 1500MPa (Claim 3).

The invention intends to resolve the problem by increasing an allowable fatigue stress of a bolt for fixing a bearing cup or a bearing holder of a universal joint to a yoke, or a bolt for fixing a yoke fitted with a bearing cup to a flange.

That is, according to the invention, by constituting a bolt used in a universal joint of this kind by a bolt subjected to forming of a rod in place of a bolt of a background art subjected to a heat treatment after turning and carrying out a step of the forming of a bolt after a heat treatment step, in comparison with the bolt of the background subjected to turning, a fiber flow is constituted by a shape along a shape of a screw, a large residual compressive stress is produced right below a surface of a bottom portion of the screw, as a result, an allowable fatigue stress is considerably increased and a crack can be restrained from being brought about at the bottom portion of the screw. By considerably increasing the allowable fatigue stress of the bolt, a loading capacity of the universal joint can be increased.

Further, by using nickel chromium molybdenum steel as the material of the bolt as in the invention according to Claim 2, the above-described effect can stably be achieved under a required strength range, further, by making the maximum residual compressive stress provided to the bolt by the forming of a rod after the heat treatment equal to or larger than 1500MPa, the above-described effect can be ensured.

### Advantage of the Invention

According to the invention, in the universal joint of the type of fixing the bearing cup or the bearing holder to the yoke by the bolt, or the type of fixing the yoke fitted with the bearing cup to the flange by the bolt, the bolt subjected to forming of a rod after the heat treatment is used and therefore, the fiber flow is constituted by the shape along the shape of the screw, the large residual compressive stress is provided to right below of the surface of the bottom portion of the screw and therefore, the allowable fatigue stress of the bolt is considerably increased (about 1.9 times as much as that of the bolt of the background art subjected to turning) and even used for long period of time, the crack can be restrained from being brought about at the bottom portion of the screw of the bolt.

### Brief Description of the Drawings

[Fig.1]
   Fig.1 is a partially disassembled perspective view of an embodiment of the invention.
[Fig.2]
   Fig.2 is a sectional view of a trunnion 11 and a bearing cup 3 in Fig.1 orthogonal to an axis thereof.
[Fig.3]

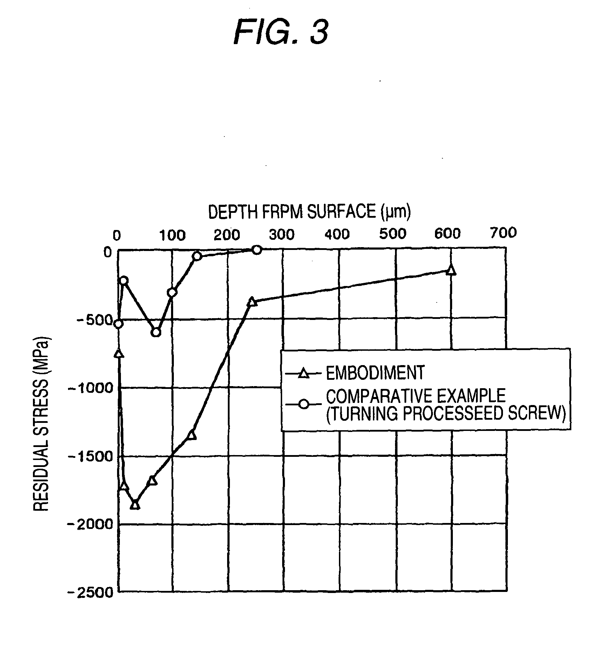

   Fig.3 is a graph showing a measurement result of a residual stress of a bolt 5 according to the embodiment of the invention along with a comparative example.
[Fig.4]

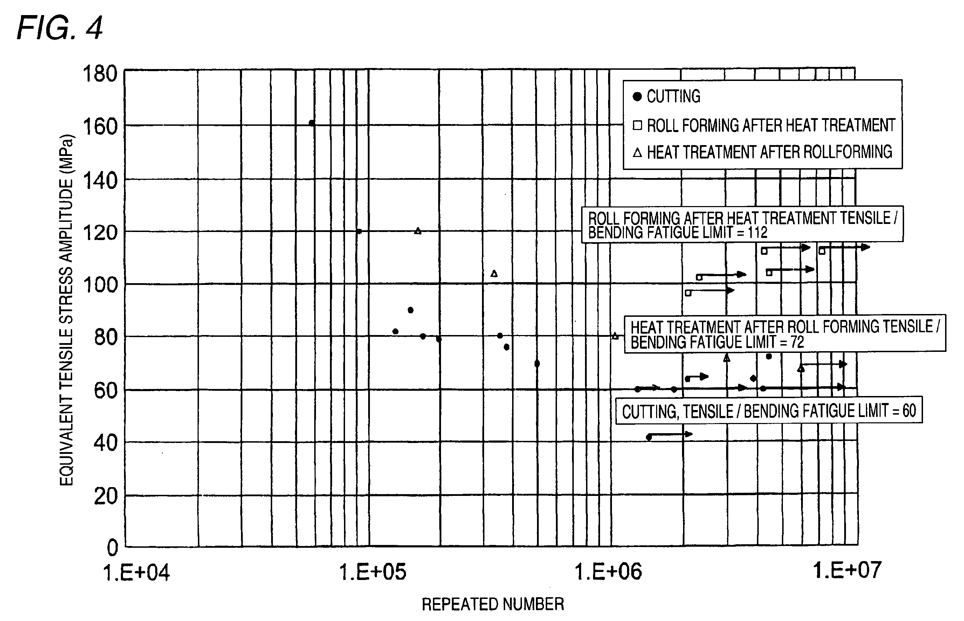

   Fig.4 is a graph showing a result of a fatigue test of the bolt 5 according to the embodiment of the invention along with a comparative example.
[Fig.5]
   Fig. 5 is a sectional view of vicinities of a trunnion and a bearing cup according to other embodiment of the invention orthogonal to an axis thereof.
[Fig.6]
   Fig. 6 is a sectional view of vicinities of a trunnion and a bearing cup according to still other embodiment of the invention orthogonal to an axis thereof.

### Best Mode for Carrying Out the Invention

An embodiment of the invention will be described with reference to the drawings as follows.
Fig.1 is a partially disassembled perspective view of an embodiment according to the invention to a universal joint of a block type, and Fig.2 is a sectional view at vicinities of a trunnion and a bearing cup orthogonal to an axis thereof.

As described above, the example is provided with the structure in which the bearing cup 3 supporting the respective trunnions 11 of the joint cross 1 by way of the roller 2 is fixed to the yokes 4 by the bolts 5. The key portion 31 is integrally formed at the face of the bearing cup 3 to which the yoke 4 is to be fixedly coupled, and the both members are fixedly coupled in the state in which the key portion 31 is fitted to the key way 41 formed at the yoke 4.

A characteristic of the embodiment resides in the bolt 5 and in that a material thereof is made of nickel chromium molybdenum steel designated as SNCM630 in Japanese Industrial Standards (JIS), tempered to a strength range of 12.9 by a heat treatment and a screw portion is formed by roll forming after the heat treatment step, thereby, a large compressive stress remains right below a surface of a bottom portion of the screw of the bolt 5 and an allowable fatigue stress can considerably be improved.

Fig. 3 shows an example of measuring a residual stress distribution of the bolt 5 of the embodiment of the invention along with an example of measuring a residual stress of a bolt produced by turning process of a background art as a comparative example. As shown by the graph, whereas in the case of the bolt by turning process, the compressive stress is 500MPa or more at maximum, according to the embodiment of the invention, a compressive stress exceeding a maximum of 1800MPa remains at a position of about 30µm from the surface, and the residual compressive stress contributes to considerably promoting the allowable fatigue stress along with a fiber flow formed to be along the shape of the screw by roll forming.

Fig.4 shows a result of a fatigue test of the bolt 5 used in the embodiment of the invention by a graph along with a test result of a bolt by the turning process of the background art as a comparative example and a test result of abolt subj ected to a heat treatment after forming a screw portion by roll forming similarly as a comparative example. As apparent from the graph, whereas according to the bolt by the turning process, a tension/bending fatigue limit is 60MPa, and according to the bolt subjected to a heat treatment after roll forming, the tension/bending fatigue limit is 72MPa which is 1.2 times as much as 60MPa, according to the bolt 5 subjected to the roll forming after the heat treatment used in the embodiment of the invention, the tension/bending fatigue limit shows a value of 112MPa which is 1.9 times as much as that of the bolt of the background art subjected to the turning process.

Here, although in the above-described embodiment, an example in which the invention is applied to the universal joint of the block type has been shown, the invention is equally applicable also to a universal joint of a round type and a universal joint of a split type.

Fig.5 and Fig.6 are views respectively showing examples of structures of universal joints of a round type and a split type, and respectively showing sectional views of vicinities of trunnions and bearing cups of joint crosses orthogonal to axes thereof.

According to the round type, as shown in Fig.5, a bearing cup 51 supporting the trunnion 11 through the roller 2 is indirectly fixed to a yoke 53 by fixing a bearing holder to the yoke 53 by a bolt 54 in a state that the bearing cup 51 is held between the bearing holder 52 in a circular arc shape and the yoke 53.

According to the split type, as shown in Fig.6, a bearing cup 61 supporting the trunnion 11 by way of the roller is directly fitted to a yoke 62, and the yoke 62 is fixed to a flange 64a formed at an end portion of a shaft 64 by a bolt 63.

Tension/bending stress acts on the bolt 54 or 63 in the universal joints of the round type and the split type described above in the same manner as the bolt 5 of the universal joint of the block type. Therefore, with using a bolt in which a fiber flow along a shape of a screw and a strong residual compressive stress is applied to below a surface of a bottom portion of the screw by being subjected to roll forming after a heat treatment for the bolt 54 or 63, the universal joint which promotes the allowable fatigue limit and in which a crack is difficult to be produced in the bolt even when an excessively large tensile and bending stress repeatedly act by use over a long period of time to thereby achieve a stable performance over a long period of time can be provided.

## Claims

1. A universal joint in which bearing cups for supporting respective trunnions of a joint cross through needle-like rollers or a holding member thereof is fixed to a yoke by a bolt, or a yoke fitted with a bearing cup is fixed to a flange by a bolt;
wherein the bolt is a bolt subjected to roll forming after a heat treatment.

2. The universal joint according to Claim 1, **characterized in that** a material of the bolt comprises nickel chromium molybdenum steel.

3. The universal joint according to Claim 1 or 2, **characterized in that** a maximum residual compressive stress of the bolt is equal to or larger than 1500MPa.
